# EUROPEAN PATENT SPECIFICATION

(11) **EP 4 143 463 B1**
(45) Date of publication and mention of the grant of the patent: **30.09.2026**
(21) Application number: 20723823.9
(22) Date of filing: 30.04.2020
(51) Int. Cl.: F16J 10/04, F02B 77/04, F02F 1/00

(54) **AN ANTIPOLISHING RING**
ANTIPOLIERRING
BAGUE ANTI-POLISSAGE

(43) Date of publication of application: 08.03.2023
(73) Proprietor: Wärtsilä Finland Oy, 65100 Vaasa (FI)
(72) Inventor: NURMI, Hannu, 65100 Vaasa (FI); CAFARI, Alberto, 65100 Vaasa (FI); KUITUNEN, Jorma, 65100 Vaasa (FI); VALTARI, Ari-Pekka, 65100 Vaasa (FI)
(74) Representative: Genip Oy
(86) International application number: PCT/EP2020/061975
(87) International publication number: WO 2021/219221

(56) References cited:
- EP-A2- 0 288 096
- CN-U- 202 125 365
- DE-U1- 202012 002 772
- US-B2- 9 347 583

## Description

### Technical field

The present invention relates to an antipolishing ring for an internal combustion piston engine according to the preamble of the claim 1.

### Background art

Invention relates to combustion of a fuel-air charge in an internal combustion piston engine. It is known as such that form of the piston top, valve head surface and combustion chamber has a great influence of engine performance and emissions, such as NOx and hydrocarbon emissions. Particularly the crevice area at the radial periphery between a piston top and a cylinder head, when the piston is at proximity to the top dead center may result in poor combustion.

An antipolishing ring arrangement is commonly utilized in a cylinder of an internal combustion piston engine, which is capable for being employed as, for example, main or auxiliary engines of a ship or which are suitable for production of heat and/or electricity in a land based power plant. An antipolishing ring is commonly used in a cylinder sleeve of an internal combustion piston engine for removing deposit that may accumulate on the top land of the piston. In this way, wearing of the cylinder sleeve and consumption of lubricating oil may be decreased. The antipolishing ring is typically positioned in the cylinder liner at a distance from the cylinder head surface bordering the combustion chamber of the cylinder and therefore it has an influence to the shape of the combustion chamber. Following documents are referred to as disclosing an antipolishing ring.

US 5553585 discloses an antipolishing ring arrangement which allow the lower part of the ring to be bent or deflected towards the top land of the piston at normal operating speed and load of the engine or when it is totally warmed up.

US 6367463 discloses an antipolishing ring arrangement which comprises at least two separate ring elements which are disposed one after the other in the axial direction of the cylinder sleeve.

It is known as such to provide the antipolishing ring with various shapes at its axial end facing the cylinder head and at its radial inner surface for various purposes. For example FI20020827 discloses a flame ring, which name may also be used for an antipolishing ring, which is partially reduced in the thermal high-load areas to increase the elasticity of the ring. Wall thickness is reduced by axial grooves on the inside of the ring in the upper part. The grooves stop short of the ring surface and run parallel to the liner axis at an angle to this.

It may be advantageous to install the antipolishing ring in to a recess in the liner such that the antipolishing ring does not substantially contact the cylinder head. This is because strong axial press may cause the antipolishing ring to deform undesirably.

EP 3043054 B1 discloses a cuff-ring installed in a recess of a cylinder liner. When installed in the recess, the carbon scraping ring is positioned to in respect to the cylinder head such that during operation of the internal combustion engine there may be a contact between the cylinder head and the carbon scraping ring occurs. It is suggested to provide an axial end of the cuff-ring with a protrusion resulting contact surface between cylinder head and cuff-ring to be smaller than an area of a top end of the ring. The proposed solution forms a squish area at the periphery of the combustion chamber which is prone to cause incomplete combustion of fuel. DE 20 2012 002772 U1 discloses an antipolishing ring according to the preamble of claim 1.

It is an object of the invention to provide a new and improved antipolishing ring arrangement, by means of which the combustion efficiency is improved and emissions are reduced.

### Disclosure of the Invention

Objects of the invention can be met substantially as is disclosed in the independent claim and in the other claims describing more details of different embodiments of the invention.

According to an embodiment of the invention and antipolishing ring for an internal combustion piston comprising
an axial center axis,
a radially inner surface extending in the direction of the center axis configured to scrape of deposit from a piston when assembled to an engine
a radially outer surface extending in the direction of the center axis configured to contact a cylinder liner,
a first axial end extending between the radially inner surface and the radially outer surface configured to face the cylinder head when assembled to the engine,
a second axial end extending between the radially inner surface and the radially outer surface, at axially opposite end to the first axial end, wherein first axial end of the antipolishing ring comprises a compound bevel portion at radially inner side of the antipolishing ring.

This way a larger volume between the cylinder head and the antipolishing ring is obtained, without jeopardising the strength of the ring at it end closer the cylinder head when assembled.

Particularly during the first half of the valve lift, a valve flow coefficient (ratio of actual gas flow to the ideal gas flow) is improved, meaning better filling and emptying of the cylinder and lower charge air pressure requirement for a given trapped mass in the cylinder.

According to an embodiment of the invention the compound bevel portion has an axial length from the end of the first axial end of the antipolishing ring, the length being larger than thickness of the antipolishing ring.

According to an embodiment of the invention the compound bevel portion has an axial length from the end of the first axial end of the antipolishing ring, the length being at least two times larger than thickness of the antipolishing ring.

According to an embodiment of the invention the compound bevel portion comprising at least one circumferential discontinuity in the radially inner surface.

This feature even more enhances the effect of obtaining increased volume between the antipolishing ring and the cylinder head.

According to an embodiment of the invention the first axial end of the antipolishing ring comprises a first surface extending radially from the radially outer surface towards the center axis, between a first diameter and a second diameter, the second diameter being smaller than the first diameter, and a second surface which is radially extending from the second diameter to a third diameter, the third diameter being smaller than the second diameter, and a third surface is radially extending from the third diameter to a fourth diameter, the fourth diameter being smaller than the third diameter.

According to an embodiment of the invention the first axial end of the antipolishing ring comprises a first surface extending radially from the radially outer surface towards the center axis, between a first diameter and a second diameter, the second diameter being smaller than the first diameter, and a second surface which is substantially conical and is radially extending from the second diameter to a third diameter, the third diameter being smaller than the second diameter, and a third surface which is substantially conical and is radially extending from the third diameter to a fourth diameter, the fourth diameter being smaller than the third diameter.

This way the antipolishing ring is easy to manufacture, gas exchange of the combustion chamber is improved, which means better filling and emptying of the cylinder, and lower charge air pressure requirement (less work for a turbo-charge) for a given trapped mass in the cylinder. This feature even more enhances the effect of obtaining increased volume between the antipolishing ring and the cylinder head.

According to an embodiment of the invention the first axial end of the antipolishing ring comprises a first surface extending radially, from the radially outer surface towards the center axis, between a first diameter and a second diameter, the second diameter being smaller than the first diameter, and is radially extending from the second diameter to a third diameter, the third diameter being smaller than the second diameter, and a third surface which is radially extending from the third diameter to a fourth diameter, the fourth diameter being smaller than the third diameter.

According to an embodiment of the invention the second surface is substantially conical and the third surface is substantially conical.

According to an embodiment of the invention the second surface and the third surface has a form of curved funnel.

According to an embodiment of the invention the second surface is substantially conical and the third surface has a form of curved funnel.

According to an embodiment of the invention the third surface is substantially conical and the second surface has a form of curved funnel.

According to an embodiment of the invention compound bevel portion at the first axial end of the antipolishing ring comprises a first surface extending radially from the radially outer surface towards the center axis, between a first diameter and a second diameter, the second diameter being smaller than the first diameter, and a second surface which is substantially conical and is radially extending from the second diameter to a third diameter, the third diameter being smaller than the second diameter, and a third surface which is substantially conical and is radially extending from the third diameter to a fourth diameter, the fourth diameter being smaller than the third diameter, and in which the axial length of the compound bevel portion of the first, the second and the third surfaces is longer than thickness of the antipolishing ring.

This feature even more enhances the effect of obtaining increased volume between the antipolishing ring and the cylinder head without jeopardizing the strength of the antipolishing ring.

According to an embodiment of the invention the first surface is flat.

According to an embodiment of the invention the first surface is at right angle to the center axis.

According to an embodiment of the invention the first surface is flat and is at right angle to the center axis.

According to an embodiment of the invention the first axial end of the antipolishing ring complies with the condition that the difference between the first diameter - the second diameter is smaller than the difference between the third diameter - the fourth diameter.

According to an embodiment of the invention the first axial end of the antipolishing ring complies with the condition that the difference between the third diameter - the fourth diameter is smaller than the difference between the second diameter - the third diameter.

According to an embodiment of the invention the first axial end of the antipolishing ring complies with the condition that the difference between the third diameter - the fourth diameter is smaller than the difference between the first diameter - the third diameter.

According to an embodiment of the invention the second and third surface collectively extend axially over a distance which is more than thickness of the antipolishing ring.

According to an embodiment of the invention the first axial end of the antipolishing ring consist of the first surface, the second surface, and the third surface which has a rounded section at its axial end nearest to the second axial end of the antipolishing ring.

Generally by means of the invention it is possible to radially reduce the material of the antipolishing ring i.e. increase the squish area of the combustion chamber more effectively, more downwards and virtually independently from thickness of the antipolishing ring wall. Also by using the antipolishing ring according to the invention the combustion efficiency is improved, and less total hydrocarbon emission and the valve flow coefficient improvement is presented.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates a partial cut out of a combustion chamber of an internal combustion piston engine provided with an antipolishing ring according to an embodiment of the invention,
Figure 2 illustrates an antipolishing ring according to an embodiment of the invention,
Figure 3 illustrates a cross section of the first axial end of an antipolishing ring according to still another embodiment of the invention,
Figure 4 illustrates an antipolishing ring according to another embodiment of the invention,
Figure 5 illustrates an antipolishing ring according to another embodiment of the invention,
Figure 6 illustrates an antipolishing ring according to another embodiment of the invention,
Figure 7 illustrates an antipolishing ring according to another embodiment of the invention and
Figure 8 illustrates an antipolishing ring according to another embodiment of the invention.

### Detailed Description of Drawings

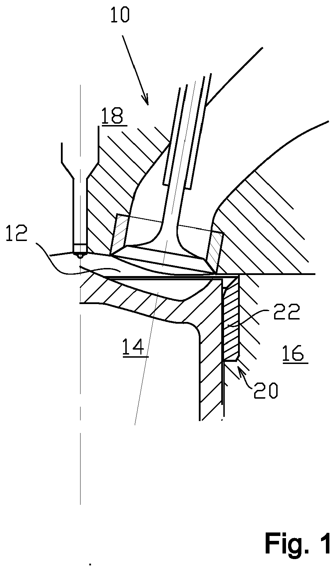

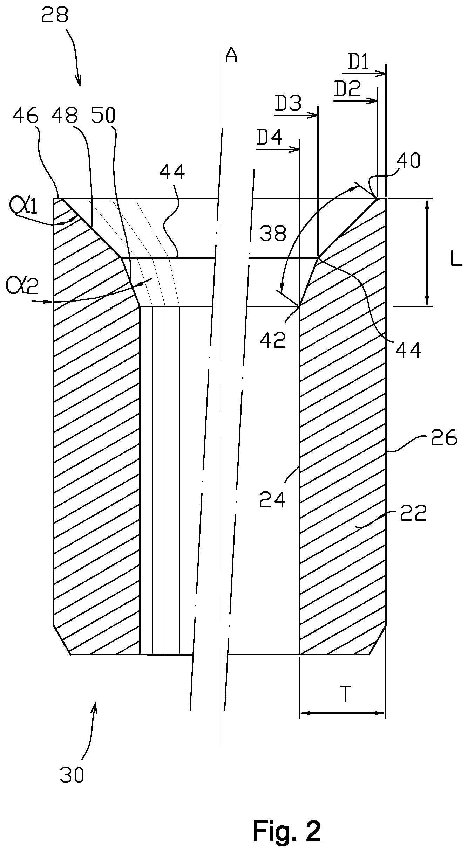

Figure 1 depicts schematically a partial cut out of a combustion chamber 12 of an internal combustion piston engine 10, formed by a piston 14, a liner 16 arranged to a cylinder or a block of the engine, and a cylinder head 18. The liner 16 is removably assembled into a block of the engine 10 such that it may be readily replaced if it becomes worn or damaged. The liner 16, or the cylinder if the engine is not provided with the liner 16, is proved with an internal radial recess 20 which is configured to receive an antipolishing ring 22. An antipolishing ring 22 according to an embodiment of the invention is depicted in more detailed manner in the figure 2.

Now referring to the figure 2 the antipolishing ring comprises an axial center axis A and the antipolishing ring is arranged to be rotationally symmetrical in respect to the axis A and the form of the ring extends the same circumferentially around the antipolishing ring 20.

The antipolishing ring comprises a radially inner surface 24 which extends in the direction of the center axis. It is generally of cylindrical form. It is also suitably configured to scrape of deposit from a piston when assembled to an engine10. The antipolishing ring 22 also comprises a radially outer surface 26 extending in the direction of the center axis A. The outer surface is also generally of cylindrical for and it is configured to contact a cylinder liner 16.

The antipolishing ring 22 further comprises a first axial end 28 and a second axial end 30 axially opposite to the first axial end 28. The first axial end 28 is radially extending between the radially inner surface 24 and the radially outer surface 26. The first axial end 28 is configured to face the cylinder head 18 at a distance from the cylinder head when assembled to the engine 18. The second axial end 30 is radially extending between the radially inner surface 24 and the radially outer surface 26. The radially outer surface 26 is chamfered at its second axial end.

As it becomes clear from the figure 1, according to an embodiment of the invention the first axial end 28 of the antipolishing ring 22 comprises a compound bevel portion 38 between annular points 40 and 42, as an extension of its radially inner, cylindrical surface 24. The compound bevel has an axial length L from the end of the first axial end 28 of the antipolishing ring 22. The length is larger than wall thickness T of the antipolishing ring 22. The compound bevel portion comprising a circumferentially extending discontinuity, or discontinuing surface transition 44 in the radially inner surface between the point 40 and 42. In other words the discontinuity 44 circumscribe the ring.

The first axial end 28 of the antipolishing ring 22 comprises a first surface 46 which extends radially from the radially outer surface 26 towards the center axis A, between a first diameter D1 and a second diameter D2. The first diameter D1 is the outer diameter of the antipolishing ring 22. The second diameter D2 is smaller than the first diameter D1. The first surface 46 is perpendicular to the center axis A.

The first axial end 28 of the antipolishing ring 22 comprises a second surface 48,48',48" which radially next inside the first surface 46. The second surface 48,48',48" is substantially conical and is radially extending from the second diameter D2 to a third diameter D3 towards the center axis A, the third diameter D3 being smaller than the second diameter D2. Advantageously the radial extension of the second surface, that is, the difference D2 - D3 is more than 50 % of the thickness T of the wall of the antipolishing ring.

The first axial end 28 of the antipolishing ring 22 further comprises a third surface 50 which is also substantially conical and is radially extending towards the center axis A from the third diameter D3 to a fourth diameter D4, the fourth diameter D4 being smaller than the third diameter D3.

The antipolishing ring of the embodiment of the figure 2 provides advantageous effects i.e. improved combustion and reduced emissions, but still maintaining required strength of the first axial end 28. The advantageous effects are obtained particularly when the form of the first axial end complies with following condition: difference between the first diameter D1 - the second diameter D2 < difference between the third diameter D3 - the fourth diameter D4 < the difference between the first diameter D1 - the third diameter D3. The difference be-tween the first diameter D1 - the second diameter D2 means the first surface 46, the difference between the third diameter D3 - the fourth diameter D4 means the fourth surface 50, and the difference between the first diameter D1 - the third diameter D3 means the combined surface of the first surface 46 and the second surface 48,48',48". Thus, with a reference to the radial extensions of the surfaces: the first surface 46 is smaller than the combined first and second surfaces 46,48,48',48", which is smaller than the third surface 50. Advantageously the first surface 47 is flat and at right angle to the center axis A.

The conical second surface 48,48',48" is at an angle α1 in respect to the center axis A. The angle α1 is 35 - 60 degrees, advantageously about 45 degrees in respect to the center axis A. In practise this means 45 ± 2 degrees. Since angle of the conical second surface is considerably large, the material thickness of the very end of the anti-polishing ring can maintained substantially big, it is therefore it is also very robust of its construction. Additionally, the conical third surface 50 is at an angle α2 in respect to the center axis A. The angle α2 is 10 - 25 degrees, advantageously about 20 degrees. In practise this means 20 ± 2 degrees. By means of the substantially small angle of the third surface at the lower part of the compound bevel portion 38 it is ensured that swirling gas in the combustion chamber can enter more efficiently to the area of the second and the first surface of the antipolishing ring. This minimizes the risk of formation of unburned combustible gases, such that hydrocarbons, in the radial periphery regions between the antipolishing ring and the cylinder head.

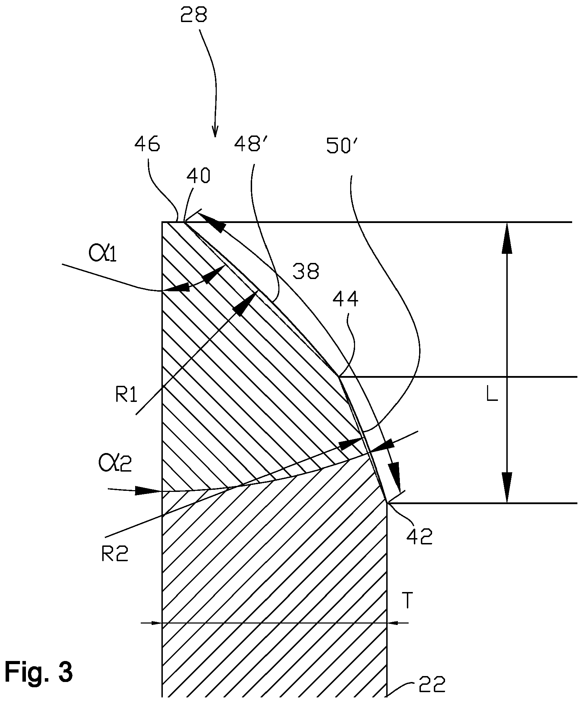

Figure 3 discloses a cross section of the first axial end 28 of an antipolishing ring 22 according to another embodiment of the invention in which the compound bevel portion 38 is more precisely realized so that the first axial end 28 of the antipolishing ring 22 comprises the first surface 46 extending radially from the outer surface 26 towards the center axis A, between a first diameter D1 and a second diameter D2, the second diameter D2 being smaller than the first diameter D1, similar to that of the figure 1. In this embodiment the first axial end 28 comprises a second surface 48' which has a form of curved funnel having a radius of curvature such that the shape has only a minor, or insignificant deviation from straight line. That can be seen as a curved surface in the cross section. The second surface cross section is in a form of an arc having a first radius R1. Still the second surface 48' is radially extending from the second diameter D2 to a third diameter D3 (see the figure 2), the third diameter D3 being smaller than the second diameter D2. Respectively, a third surface 50' has a form of curved funnel and is radially extending from the third diameter D3 to a fourth diameter D4, the fourth diameter D4 being smaller than the third diameter D3. That can be seen as a curved surface in the cross section. The third surface cross section is in a form of an arc having a second radius R2 such that the shape has only a minor deviation from straight line. Practically the arches deviate only insignificantly from a straight line connecting the points 40, 44, 22 by its radius of curvature but still running through the points such that the compound bevel portion comprises only one circumferential discontinuity 44 in the radially inner surface.

Thus, as it becomes clear from the figure 3 the first axial end 28 of the antipolishing ring 22 comprises a compound, curved bevel portion 38 between annular points 40 and 42, as an extension of its radially inner surface 24. The compound curved bevel has an axial length L from the end of the first axial end 28 of the antipolishing ring 22. The length is larger than wall thickness T of the antipolishing ring 22. The compound curved bevel portion comprising a circumferentially extending discontinuity, or discontinuing surface transition 44 in the radially inner surface between the point 40 and 42. In other words the discontinuity 44 circumscribe the ring. The features shown in the figures 2 and 3 can be combined in a single antipolishing ring such that one of the second surface 48,48',48", 48,48',48‴ and the third surface 50, 50' is conical and the other one is of funnel shape. Advantageously the first surface 47 is flat and at right angle to the center axis A.

Applying to the both embodiments shown in the figure 2 and figure 3, advantageoulsy the difference between the first diameter D1 - the second diameter D2 < difference be-tween the third diameter D3 - the fourth diameter D4 < the difference between the first diameter D1 - the third diameter D3.

Also in both the embodiments of the figure 2 and 3 the second and third surfaces 48,48',48",50,48,48',48"',50' collectively extend axially over a distance of the length L which is more than thickness T of a wall of the antipolishing ring 22.

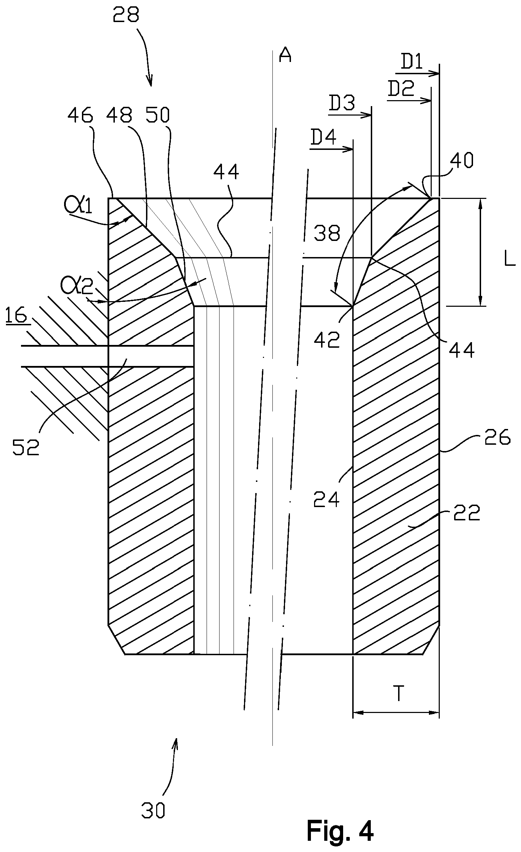

Figure 4 discloses an optional, further embodiment, by means of which the invention can be further developed. In the figure 4 the antipolishing ring 22 is provided with a radial through hole 52. The hole 52 is positioned to the antipolishing ring 22 longitudinally at a position outside the bevelled portion at the first axial end of the antipolishing ring. The through hole makes it possible to provide a pressure sensor in connection with the hole 52 so as to measure the pressure in the combustion chamber when in use. Temperature and vibration levels in the cylinder liner are lower than in a cylinder head which increases the lifetime of pressure sensor.

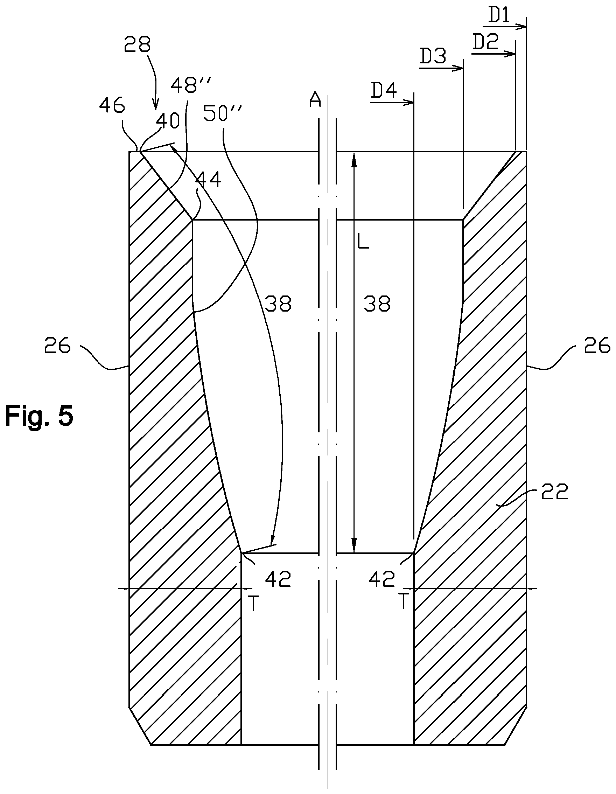

Figure 5 discloses a cross section of the first axial end 28 of an antipolishing ring 22 according to another embodiment of the invention. According to this particular embodiment the compound bevel portion 38 is more precisely realized so that the first axial end 28 of the antipolishing ring 22 comprises the first surface 46 extending radially from the outer surface 26 towards the center axis A, be-tween a first diameter D1 and a second diameter D2, the second diameter D2 being smaller than the first diameter D1, similar to that of the figure 1. In this embodiment the first axial end 28 comprises a second surface 48,48',48ʺʺ which is of conical form. The second surface 48,48',48ʺʺ is radially extending from the second diameter D2 to a third diameter D3, the third diameter D3 being smaller than the second diameter D2. However, a third surface 50" has a form of substantially curved funnel and is radially extending from the third diameter D3 to a fourth diameter D4, the fourth diameter D4 being smaller than the third diameter D3. As is depicted in the figure 5 the part of the third surface 50" closest to the first axial end 28 of the antipolishing ring 22 is cylindrical and the remaining part of funnel shape that curves inwards between the points 42 and 44, such that the surface is concave. The compound bevel portion 38 comprises only one circumferential discontinuity 44 in the radially inner surface. Thus, as it becomes clear from the figure 5 the first axial end 28 of the antipolishing ring 22 comprises a compound bevel portion 38 between annular points 40 and 42. The compound bevel portion has an axial length L from the end of the first axial end 28 of the antipolishing ring 22. The axial length L is larger than the wall thickness T of the antipolishing ring 22. The compound bevel portion 38 comprises a circumferentially extending discontinuity, or discontinuing surface transition 44 in the radially inner surface between the point 40 and 42. In other words the discontinuity 44 circumscribe the ring 10. The features shown in the figures 2, 3 and 5 can be combined in a single antipolishing ring as found suitable for a given practical application.

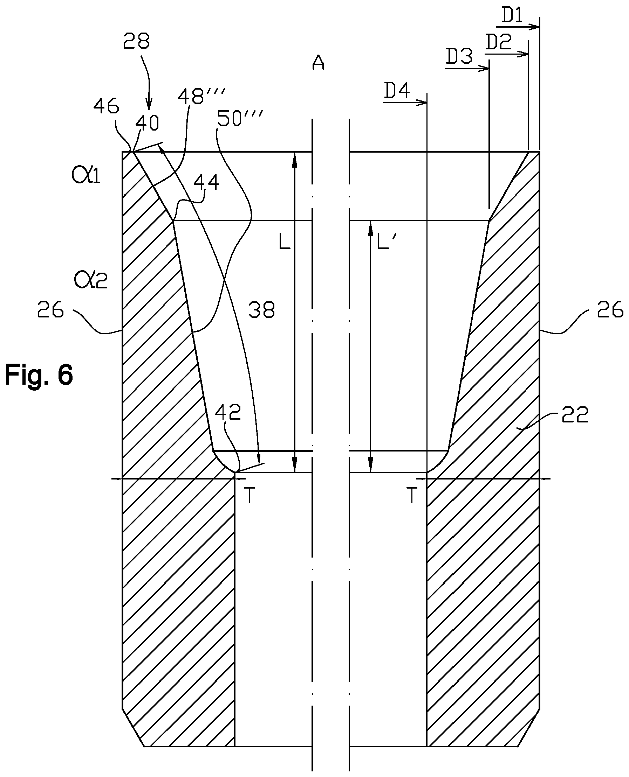

Figure 6 discloses a cross section of the first axial end 28 of an antipolishing ring 22 according to a still another embodiment of the invention. According to this particular embodiment the compound bevel portion 38 is more precisely realized so that the first axial end 28 of the antipolishing ring 22 comprises the first surface 46 extending radially from the outer surface 26 towards the center axis A, between a first diameter D1 and a second diameter D2, the second diameter D2 being smaller than the first diameter D1, similar to that of for example the figure 1. In this embodiment the first axial end 28 comprises a second surface 48‴ʺ which is of conical form. The second surface 48ʺʺ is radially extending from the second diameter D2 to a third diameter D3, the third diameter D3 being smaller than the second diameter D2. A third surface 50‴ is radially extending from the third diameter D3 to a fourth diameter D4, the fourth diameter D4 being smaller than the third diameter D3. However, a third surface 50‴ of the antipolishing ring 22 comprises of two sections. As is depicted in the figure 6 the section of the third surface 50‴ closest to the first axial end 28 of the antipolishing ring 22 is conical and the remaining part is of funnel shape that curves inwards be-tween the points 42 and 44, such that the third surface comprises a concave, or inwardly rounded section at its axial end opposite to the first axial end 28. Also in this embodiment the compound bevel portion 38 comprises only one circumferential discontinuity 44 in the radially inner surface. Thus, as it becomes clear from the figure 5 the first axial end 28 of the antipolishing ring 22 comprises a compound bevel portion 38 between annular points 40 and 42. The compound bevel portion has an axial length L from the end of the first axial end 28 of the antipolishing ring 22. The axial length L is larger than the wall thickness T of the antipolishing ring 22. In the embodiment shown in the figure 6 the axial length L of the bevel portion 38 is more than 2x the wall thickness T of the antipolishing ring 22. The compound bevel portion 38 comprises a circumferentially extending discontinuity, or discontinuing surface transition 44 in the radially inner surface between the point 40 and 42. In other words the discontinuity 44 circumscribe the ring 10. It can also be seen in the figure 6 the third surface 50‴ has an axial length L'. In the embodiment of the antipolishing ring according to the figure 6 the ratio of the axial length L' of the third surface 50‴ to the axial length L of the compound bevel portion 38 is between 0,5 to 0,85. This facilitates obtaining larger volume between the cylinder head and the antipolishing ring when assembled to an internal combustion piston engine, without jeopardising the strength of the ring at it end closer the cylinder head when assembled. The features shown in the figures 2, 3, 5 and 6 can be combined in a single antipolishing ring as found suitable for a given practical application.

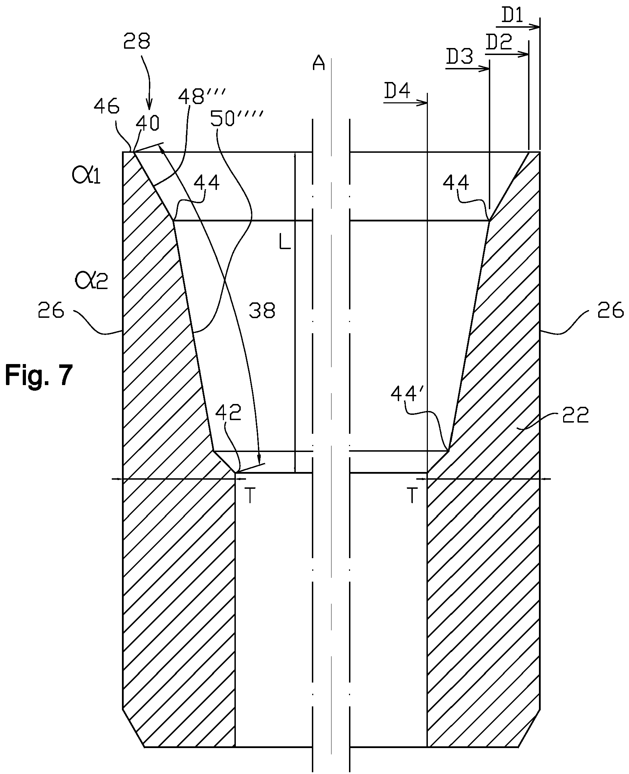

Figure 7 discloses a cross section of the first axial end 28 of an antipolishing ring 22 according to a still another embodiment of the invention which is otherwise similar to that shown in the figure 6 except that the compound bevel portion 38 has a third surface 50ʺʺ of the antipolishing ring 22 comprises of two parts where the part of the third surface 50ʺʺ closest to the first axial end 28 of the antipolishing ring 22 is conical, like in the figure 6, but the remaining part is also of conical shape such that the compound bevel portion 38 comprises two circumferential discontinuities 44, 44' or discontinuing surface transitions 44, 44' in the radially inner surface between the point 40 and 42. Also in the figure 7 the compound bevel portion has an axial length L from the end of the first axial end 28 of the antipolishing ring 22 wherein the axial length L of the bevel portion 38 is more than 2x the wall thickness T of the antipolishing ring 22. The features shown in the figures 2, 3, 5, 6 and 7 can be combined in a single antipolishing ring as found suitable for a given practical application.

Invention is applicable for use in various kinds of internal combustion piston engines. Such engines may be operated with various kinds of fuels such as, liquid fuels or gaseous fuel and the cycle used in the engine may be selected from various cycles known as such, for example diesel, otto, Atkinson, Miller cycles are feasible for use, depending on the application. Ignition of the fuel may be accomplished by internal ignition, such as diesel compression ignition, Reactivity Controlled Compression Ignition, Homogeneous Charge Compression Ignition or external ignition, such as spark, laser and/or plasma ignition.

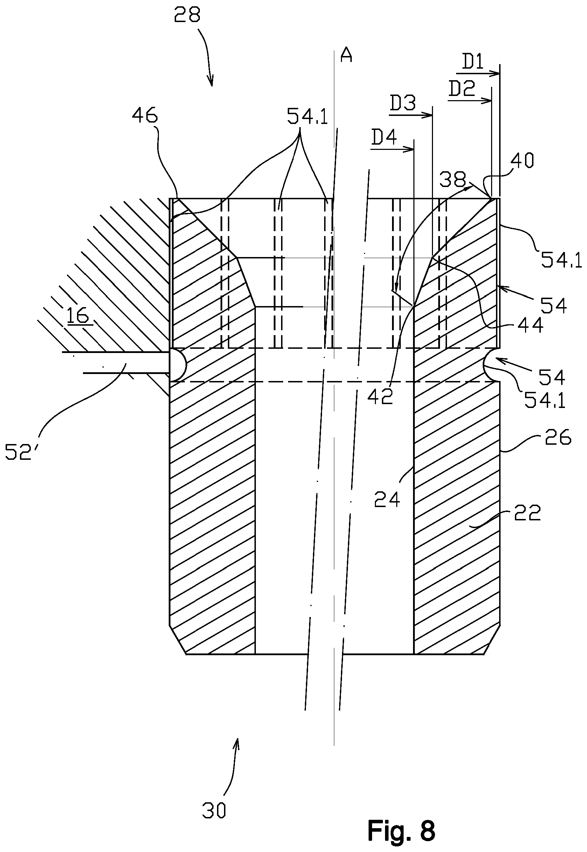

Figure 8 illustrate an optional, further embodiment, by means of which the invention can be further developed. In the figure 8 the antipolishing ring 22 is provided with a grooving 54 at the radially outer surface 26 of the antipolishing ring 22. The grooving comprises a first groove 54.1 which circumscribes the antipolishing axially outside the compound bevel portion 38. Additionally the grooving 54 comprises more than one second grooves 54.2 which are arranged longitudinally extending from the first groove 54.1 to the first surface 46, which in turn extends radially from the radially outer surface 26 towards the center axis A, be-tween a first diameter D1 and a second diameter D2. The grooving 54 according to the invention provides even and representative measurement of the pressure in the combustion chamber 12. Also due to the compound bevel portion 38 of the antipolishing ring 22 the transmission of the pressure is enhanced due to a larger volume between the cylinder head and the antipolishing ring.

Advantageously the second grooves 54.2 are parallel with the longitudinally axis A.

The cylinder liner 16 is provided with a hole 52' which is in flow connection with the grooving 54 arranged in the antipolishing ring 22. This makes it possible to provide a pressure sensor in connection with the hole 52' so as to measure the pressure in the combustion chamber via the grooving 54 by allowing transmission of pressure from the combustion chamber 12 to the hole 52' of the cylinder liner 16. As the anti-polishing ring 22 is not in contact with the cylinder head 18 pressure in the combustion chamber can thus be transmitted through the gap to the grooving 54. This way pressure can be measured directly via the wall of the cylinder liner 16. Temperature and vibration levels in the cylinder liner and behind it are lower than in a cylinder head which increases the lifetime of pressure sensor. In other words the sensor can protected from the most extreme heat in the combustion chamber. The features shown in the figures 2, 3, 5, 6 and 8 can be combined in a single antipolishing ring as found suitable for a given practical application.

While the invention has been described herein by way of examples in connection with what are, at present, considered to be the most preferred embodiments, it is to be understood that the invention is not limited to the disclosed embodiments, but is intended to cover **the scope of the in**vention, as defined in the appended claims. The details mentioned in connection with any embodiment above may be used in connection with another embodiment when such combination is technically feasible.

## Claims

1. An antipolishing ring (22) for an internal combustion piston engine (10) comprising
an axial center axis (A),
a radially inner surface (24) extending in the direction of the center axis (A) configured to scrape deposit from a piston (14) when assembled to the engine (10), a radially outer surface (26) extending in the direction of the center axis (A) configured to contact a cylinder liner (16),
a first axial end (28) extending between the radially inner surface (24) and the radially outer surface (26) configured to face a cylinder head (18) when assembled to the engine (10),
a second axial end (30) extending between the radially inner surface (24) and the radially outer surface (26), at axially opposite end to the first axial end (28), **characterized in that** the first axial end (28) of the antipolishing ring comprises a compound bevel portion (38) at radially inner side of the antipolishing ring (22).

2. An antipolishing ring (22) according to claim 1, **characterized in that** the compound bevel portion (38) has an axial length (L) from the end of the first axial end (28) of the antipolishing ring (22), the length being larger than thickness (T) of the antipolishing ring (22).

3. An antipolishing ring (22) according to claim 1 or 2, **characterized in that** and the compound bevel portion comprising at least one circumferential discontinuity (44) in the radially inner surface.

4. An antipolishing ring (22) according to claim 1 or 2 or 3, **characterized in that** the first axial end (28) of the antipolishing ring (22) comprises a first surface (46) extending radially from the radially outer surface (26) towards the center axis (A), between a first diameter (D1) and a second diameter (D2), the second diameter (D2) being smaller than the first diameter (D1), a second surface (48,48',48",48‴) which is radially extending from the second diameter (D2) to a third diameter (D3), the third diameter (D3) being smaller than the second diameter D2), and
a third surface (50,50',50",50‴,50ʺʺ) which is radially extending from the third diameter (D3) to a fourth diameter (D4), the fourth diameter (D4) being smaller than the third diameter (D3).

5. An antipolishing ring (22) according to claim 4, **characterized in that** the second surface (48) is substantially conical and the third surface (50) is substantially conical.

6. An antipolishing ring (22) according to claim 4, **characterized in that** at least one of the second surface (48') and the third surface (50', 50") has a form of curved funnel.

7. An antipolishing ring (22) according to claim 6, **characterized in that** the second surface (48') is substantially conical and the third surface (50',50") has a form of curved funnel.

8. An antipolishing ring (22) according to claim 4, **characterized in that** the first surface (46) is flat and/or at right angle to the center axis (A).

9. An antipolishing ring (22) according to claim 4, **characterized in that** the first axial end (28) complies with the condition that difference between the first diameter (D1) - the second diameter (D2) < difference between the third diameter (D3) - the fourth diameter (D4) < difference between the second diameter (D2) - the third diameter (D3).

10. An antipolishing ring (22) according to claim 4, **characterized in that** the first axial end (28) complies with the condition that difference between the third diameter (D3) - the fourth diameter (D4) < difference between the first diameter (D1) - the third diameter (D3).

11. An antipolishing ring (22) according to claim 4, **characterized in that** the first axial end (28) complies with the condition that difference between the third diameter (D3) - the fourth diameter (D4) < difference between the second diameter (D2) - the third diameter (D3).

12. An antipolishing ring (22) according to claim 4, **characterized in that** the second (48,48',48",48‴) and third surface (50,50',50",50"',50"",) collectively extend axially (L) over a distance which is more than thickness (T) of the antipolishing ring(22).

13. An antipolishing ring (22) according to claim 4, **characterized in that** the compound bevel portion (38) has an axial length (L) from the end of the first axial end (28) of the antipolishing ring (22) and third surface (50‴) has an axial length (L') and that the first axial end (28) complies with the condition that ratio of axial length (L') of the third surface (50‴) to the axial length (L) of the compound bevel portion (38) is between 0,5 to 0,85.

14. An antipolishing ring (22) according to claim 4, **characterized in that** the first axial end (28) complies with the condition that difference between the first diameter (D1) - the second diameter (D2) < difference between the second diameter (D2) - the third diameter (D3) < difference between the third diameter (D3) - the fourth diameter (D4)

## Patentansprüche

1. Ölkohleabstreifring (22) für einen Hubkolben-Verbrennungsmotor (10), wobei der Ölkohleabstreifring (22) Folgendes umfasst:
eine axiale Mittelachse (A),
eine in Radialrichtung innere Oberfläche (24), die sich in einer Richtung der Mittelachse (A) erstreckt, dafür konfiguriert, eine Ablagerung von einem Kolben (14) abzukratzen, wenn er an dem Motor (10) angebaut ist,
eine in Radialrichtung äußere Oberfläche (26), die sich in einer Richtung der Mittelachse (A) erstreckt, dafür konfiguriert, eine Zylinderlaufbuchse (16) zu berühren,
ein erstes axiales Ende (28), das sich zwischen der in Radialrichtung inneren Oberfläche (24) und der in Radialrichtung äußeren Oberfläche (26) erstreckt, dafür konfiguriert, einem Zylinderkopf (18) gegenüberzuliegen, wenn er an dem Motor (10) angebaut ist,
ein zweites axiales Ende (30), das sich zwischen der in Radialrichtung inneren Oberfläche (24) und der in Radialrichtung äußeren Oberfläche (26), an einem zu dem ersten axialen Ende (28) in Axialrichtung entgegengesetzten Ende, erstreckt,
**dadurch gekennzeichnet, dass** das erste axiale Ende (28) des Ölkohleabstreifrings einen zusammengesetzten Abschrägungsabschnitt (38) an einer in Radialrichtung inneren Seite des Ölkohleabstreifrings (22) umfasst.

2. Ölkohleabstreifring (22) nach Anspruch 1, **dadurch gekennzeichnet, dass** der zusammengesetzte Abschrägungsabschnitt (38) eine axiale Länge (L) von dem Ende des ersten axialen Endes (28) des Ölkohleabstreifrings (22) aus aufweist, wobei die Länge größer ist als eine Dicke (T) des Ölkohleabstreifrings (22).

3. Ölkohleabstreifring (22) nach Anspruch 1 oder 2, **dadurch gekennzeichnet, dass** der zusammengesetzte Abschrägungsabschnitt mindestens eine umlaufende Diskontinuität (44) in der in Radialrichtung inneren Oberfläche umfasst.

4. Ölkohleabstreifring (22) nach Anspruch 1, 2 oder 3, **dadurch gekennzeichnet, dass** das erste axiale Ende (28) des Ölkohleabstreifrings (22) eine erste Oberfläche (46), die sich in Radialrichtung von der in Radialrichtung äußeren Oberfläche (26) zu der Mittelachse (A) hin, zwischen einem ersten Durchmesser (D1) und einem zweiten Durchmesser (D2), erstreckt, wobei der zweite Durchmesser (D2) kleiner ist als der erste Durchmesser (D1), eine zweite Oberfläche (48, 48', 48", 48‴), die sich in Radialrichtung von dem zweiten Durchmesser (D2) bis zu einem dritten Durchmesser (D3) erstreckt, wobei der dritte Durchmesser (D3) kleiner ist als der zweite Durchmesser (D2), und
eine dritte Oberfläche (50, 50', 50", 50‴, 50ʺʺ), die sich in Radialrichtung von dem dritten Durchmesser (D3) bis zu einem vierten Durchmesser (D4) erstreckt, wobei der vierte Durchmesser (D4) kleiner ist als der dritte Durchmesser (D3), umfasst.

5. Ölkohleabstreifring (22) nach Anspruch 4, **dadurch gekennzeichnet, dass** die zweite Oberfläche (48) im Wesentlichen kegelförmig ist und die dritte Oberfläche (50) im Wesentlichen kegelförmig ist.

6. Ölkohleabstreifring (22) nach Anspruch 4, **dadurch gekennzeichnet, dass** mindestens eine von der zweiten Oberfläche (48') und der dritten Oberfläche (50', 50") eine Form eines gekrümmten Trichters aufweist.

7. Ölkohleabstreifring (22) nach Anspruch 6, **dadurch gekennzeichnet, dass** die zweite Oberfläche (48') im Wesentlichen kegelförmig ist und die dritte Oberfläche (50', 50") eine Form eines gekrümmten Trichters aufweist.

8. Ölkohleabstreifring (22) nach Anspruch 4, **dadurch gekennzeichnet, dass** die erste Oberfläche (46) flach und/oder in einem rechten Winkel zu der Mittelachse (A) ist.

9. Ölkohleabstreifring (22) nach Anspruch 4, **dadurch gekennzeichnet, dass** das erste axiale Ende (28) die Bedingung erfüllt, dass eine Differenz zwischen dem ersten Durchmesser (D1) - dem zweiten Durchmesser (D2) < eine Differenz zwischen dem dritten Durchmesser (D3) - dem vierten Durchmesser (D4) < eine Differenz zwischen dem zweiten Durchmesser (D2) - dem dritten Durchmesser (D3) ist.

10. Ölkohleabstreifring (22) nach Anspruch 4, **dadurch gekennzeichnet, dass** das erste axiale Ende (28) die Bedingung erfüllt, dass eine Differenz zwischen dem dritten Durchmesser (D3) - dem vierten Durchmesser (D4) < eine Differenz zwischen dem ersten Durchmesser (D1) - dem dritten Durchmesser (D3) ist.

11. Ölkohleabstreifring (22) nach Anspruch 4, **dadurch gekennzeichnet, dass** das erste axiale Ende (28) die Bedingung erfüllt, dass eine Differenz zwischen dem dritten Durchmesser (D3) - dem vierten Durchmesser (D4) < eine Differenz zwischen dem zweiten Durchmesser (D2) - dem dritten Durchmesser (D3) ist.

12. Ölkohleabstreifring (22) nach Anspruch 4, **dadurch gekennzeichnet, dass** sich die zweite (48, 48', 48", 48‴) und die dritte Oberfläche (50, 50', 50", 50‴, 50ʺʺ) gemeinsam in Axialrichtung (L) über eine Strecke erstrecken, die mehr als die Dicke (T) des Ölkohleabstreifrings (22) beträgt.

13. Ölkohleabstreifring (22) nach Anspruch 4, **dadurch gekennzeichnet, dass** der zusammengesetzte Abschrägungsabschnitt (38) eine axiale Länge (L) von dem Ende des ersten axialen Endes (28) des Ölkohleabstreifrings (22) aus aufweist und die dritte Oberfläche (50‴) eine axiale Länge (L') aufweist und dass das erste axiale Ende (28) die Bedingung erfüllt, dass ein Verhältnis der axialen Länge (L') der dritten Oberfläche (50‴) zu der axialen Länge (L) des zusammengesetzten Abschrägungsabschnitts (38) zwischen 0,5 und 0,85 beträgt.

14. Ölkohleabstreifring (22) nach Anspruch 4, **dadurch gekennzeichnet, dass** das erste axiale Ende (28) die Bedingung erfüllt, dass eine Differenz zwischen dem ersten Durchmesser (D1) - dem zweiten Durchmesser (D2) < eine Differenz zwischen dem zweiten Durchmesser (D2) - dem dritten Durchmesser (D3) < eine Differenz zwischen dem dritten Durchmesser (D3) - dem vierten Durchmesser (D4) ist.

## Revendications

1. Bague anti-polissage (22) pour moteur à combustion interne à piston (10) comprenant
un axe central axial (A),
une surface radialement intérieure (24) s'étendant dans la direction de l'axe central (A) et configurée pour racler le dépôt d'un piston (14) lorsqu'il est assemblé au moteur (10),
une surface radialement extérieure (26) s'étendant dans la direction de l'axe central (A) et configurée pour entrer en contact avec une chemise de cylindre (16),
une première extrémité axiale (28) s'étendant entre la surface radialement intérieure (24) et la surface radialement extérieure (26) et configurée pour faire face à une culasse (18) lorsqu'elle est assemblée au moteur (10),
une seconde extrémité axiale (30) s'étendant entre la surface radialement intérieure (24) et la surface radialement extérieure (26), à l'extrémité axialement opposée à la première extrémité axiale (28),
**caractérisée en ce que** la première extrémité axiale (28) de la bague anti-polissage comprend une partie biseautée composée (38) sur le côté radialement intérieur de la bague anti-polissage (22).

2. Bague anti-polissage (22) selon la revendication 1, **caractérisée en ce que** la partie biseautée composée (38) a une longueur axiale (L) à partir de l'extrémité de la première extrémité axiale (28) de la bague anti-polissage (22), la longueur étant supérieure à l'épaisseur (T) de la bague anti-polissage (22).

3. Bague anti-polissage (22) selon la revendication 1 ou 2, **caractérisée en ce que** la partie biseautée composée comprend au moins une discontinuité circonférentielle (44) dans la surface radialement intérieure.

4. Bague anti-polissage (22) selon la revendication 1 ou 2 ou 3, **caractérisée en ce que** la première extrémité axiale (28) de la bague anti-polissage (22) comprend une première surface (46) s'étendant radialement de la surface radialement extérieure (26) vers l'axe central (A), entre un premier diamètre (D1) et un deuxième diamètre (D2), le deuxième diamètre (D2) étant inférieur au premier diamètre (D1), une deuxième surface (48, 48', 48", 48‴) qui s'étend radialement du deuxième diamètre (D2) à un troisième diamètre (D3), le troisième diamètre (D3) étant inférieur au deuxième diamètre (D2), et
une troisième surface (50, 50', 50", 50‴, 50ʺʺ) qui s'étend radialement du troisième diamètre (D3) à un quatrième diamètre (D4), le quatrième diamètre (D4) étant inférieur au troisième diamètre (D3).

5. Bague anti-polissage (22) selon la revendication 4, **caractérisée en ce que** la deuxième surface (48) est sensiblement conique et la troisième surface (50) est sensiblement conique.

6. Bague anti-polissage (22) selon la revendication 4, **caractérisée en ce qu'**au moins l'une de la deuxième surface (48') et de la troisième surface (50', 50") a une forme d'entonnoir incurvé.

7. Bague anti-polissage (22) selon la revendication 6, **caractérisé en ce que** la deuxième surface (48') est sensiblement conique et la troisième surface (50', 50") a une forme d'entonnoir incurvé.

8. Bague anti-polissage (22) selon la revendication 4, **caractérisée en ce que** la première surface (46) est plate et/ou perpendiculaire à l'axe central (A).

9. Bague anti-polissage (22) selon la revendication 4, **caractérisée en ce que** la première extrémité axiale (28) satisfait à la condition que la différence entre le premier diamètre (D1) - le deuxième diamètre (D2) < la différence entre le troisième diamètre (D3) - le quatrième diamètre (D4) < la différence entre le deuxième diamètre (D2) - le troisième diamètre (D3).

10. Bague anti-polissage (22) selon la revendication 4, **caractérisée en ce que** la première extrémité axiale (28) satisfait à la condition que la différence entre le troisième diamètre (D3) - le quatrième diamètre (D4) < la différence entre le premier diamètre (D1) - le troisième diamètre (D3).

11. Bague anti-polissage (22) selon la revendication 4, **caractérisée en ce que** la première extrémité axiale (28) satisfait à la condition que la différence entre le troisième diamètre (D3) - le quatrième diamètre (D4) < la différence entre le deuxième diamètre (D2) - le troisième diamètre (D3).

12. Bague anti-polissage (22) selon la revendication 4, **caractérisée en ce que** la deuxième surface (48, 48', 48", 48‴) et la troisième surface (50, 50', 50", 50‴, 50ʺʺ) s'étendent collectivement axialement (L) sur une distance qui est supérieure à l'épaisseur (T) de la bague anti-polissage (22).

13. Bague anti-polissage (22) selon la revendication 4, **caractérisé en ce que** la partie biseautée composée (38) a une longueur axiale (L) à partir de l'extrémité de la première extrémité axiale (28) de la bague anti-polissage (22) et la troisième surface (50‴) a une longueur axiale (L') et **en ce que** la première extrémité axiale (28) satisfait à la condition que le rapport de la longueur axiale (L') de la troisième surface (50‴) à la longueur axiale (L) de la partie biseautée composée (38) est compris entre 0,5 et 0,85.

14. Bague anti-polissage (22) selon la revendication 4, **caractérisée en ce que** la première extrémité axiale (28) satisfait à la condition que la différence entre le premier diamètre (D1) - le deuxième diamètre (D2) < la différence entre le deuxième diamètre (D2) - le troisième diamètre (D3) < la différence entre le troisième diamètre (D3) - le quatrième diamètre (D4).
